# FASCICULE DE BREVET EUROPEEN

(11) **EP 1 121 576 B1**
(45) Date de publication et mention de la délivrance du brevet: **07.05.2008**
(21) Numéro de dépôt: 99970463.8
(22) Date de dépôt: 07.10.1999
(51) Int. Cl.: G01K 11/12

(54) **ARTICLE CHAUFFANT COMPORTANT UNE SURFACE RECOUVERTE PAR UN DECOR SUSCEPTIBLE DE CHANGER DE COULEUR**
HEIZENDER GEGENSTAND MIT EINER MIT EINEM FARBVERANDERLICHEN DEKR BEDECKTEN OBERFLACHE
HEATING ARTICLE COMPRISING A SURFACE COATED WITH A DECORATIVE ELEMENT CAPABLE OF COLOUR CHANGE

(30) Priorité: 13.10.1998 FR 9812823
(43) Date de publication de la demande: 08.08.2001
(73) Titulaire: SEB S.A., 69130 Ecully (FR)
(72) Inventeur: BUFFARD, Jean-Pierre, 73100 Tresserve (FR); VOISIN, Laurent, F-74150 Sales (FR); GARDAZ, Claudine, 74150 Bloye (FR)
(74) Mandataire: Somnier, Jean-Louis
(86) Numéro de dépôt international: PCT/FR1999/002407
(87) Numéro de publication internationale: WO 2000/022395

(56) Documents cités:
- EP-A1- 0 603 969
- EP-A2- 0 188 958
- US-A- 5 135 795
- PATENT ABSTRACTS OF JAPAN vol. 097, no. 010, 31 octobre 1997 (1997-10-31) -& JP 09 164082 A (MATSUSHITA ELECTRIC IND CO LTD), 24 juin 1997 (1997-06-24)
- PATENT ABSTRACTS OF JAPAN vol. 095, no. 011, 26 décembre 1995 (1995-12-26) & JP 07 201462 A (NISSHA PRINTING CO LTD), 4 août 1995 (1995-08-04)
- PATENT ABSTRACTS OF JAPAN vol. 098, no. 014, 31 décembre 1998 (1998-12-31) -& JP 10 241470 A (FUJIKURA LTD), 11 septembre 1998 (1998-09-11)

## Description

La présente invention concerne un article chauffant tel qu'une poêle, une casserole, une sauteuse, un fer à repasser comportant une surface intérieure et/ou extérieure recouverte par un revêtement de base constitué d'une résine thermostable telle qu'une résine fluorocarbonée, par exemple en polytétrafluoréthylène.

On connaît des récipients de cuisson comportant des moyens permettant de connaître la température de la surface intérieure des récipients. Ces moyens comprennent généralement un capteur de température intégré dans le fond du récipient de cuisson et relié par des conducteurs à un boîtier électronique comportant un écran d'affichage de la température mesurée par le capteur.

Grâce aux moyens ci-dessus l'utilisateur est constamment informé sur la température de la surface de cuisson du récipient. Il est ainsi capable de détecter à quel moment précis, la surface de cuisson a atteint une température suffisante pour bien "saisir" une viande.

Le fait que la température de la surface de cuisson du récipient soit visualisée permet également d'avertir l'utilisateur que l'article est chaud et présente un danger de brûlure pour les personnes.

Les moyens connus ci-dessus présentant toutefois les inconvénients d'être compliqués et de poser des problèmes d'isolation électrique par rapport notamment à l'eau de lavage.

Dans d'autres réalisations connues, la poignée comporte dans la zone proche du récipient proprement dit de cuisson, un indicateur de température constitué d'un composé chimique susceptible de changer de couleur à une certaine température. Cependant, la température de la zone ci-dessus ne correspond pas à la température réelle de la surface de cuisson, de sorte que le changement de couleur du composé chimique ne constitue pas une indication réelle de la température atteinte par la surface de cuisson.

On connaît également la demande de brevet japonais JP09164082, qui décrit un revêtement appliqué sur la surface d'un support métallique d'un article culinaire. Ce revêtement, qui est principalement constitué d'une résine fluorocarbonée (PTFE), d'une résine de polyéthersulfone et de pigments, confère à l'article culinaire d'excellentes propriétés d'anti-adhérence, de résistance à l'huile chaude ou à l'abrasion. Les pigments, qui peuvent être choisis parmi la poudre d'aluminium, le carbone ou l'oxyde de fer, sont uniquement utilisés pour colorer le revêtement, et non pour fournir une indication de la température atteinte par la surface du support.

On connaît par ailleurs le brevet français FR 1 388 029, qui décrit un ustensile de cuisson muni d'un indicateur thermique constitué d'un corps thermosensible changeant de couleur en fonction de la température de manière réversible, cet indicateur thermique étant associé à un revêtement antiadhésif, notamment constitué de polytétrafluoroéthylène. Un pigment, dont la couleur est invariable peut également être incorporé à l'ustensile culinaire à titre de témoin pour permettre une appréciation du changement relatif de couleur de l'indicateur thermosensible, et donc du changement de température. Toutefois, l'association d'un pigment stable au pigment thermosensible ne permet pas de distinguer de façon nette le changement de température.

Or la demanderesse a trouvé un moyen particulièrement simple permettant à l'utilisateur d'être averti que la surface de son article est chaude ou a atteint une température suffisante pour son utilisation, en distinguant mieux le changement de température de cette surface.

La présente invention a donc pour objet un chauffant comportant une surface recouverte par un revêtement de base constitué de résine thermostable qui résiste à au moins 200°C et sur lequel est appliqué un décor à base de résine thermostable résistant à au moins 200°C et une substance chimique qui change, de manière réversible, de couleur en fonction de la température, ce décor recouvrant une partie du revêtement de base et adhérant à ce dernier du fait de la cuisson, qui est de préférence simultanée, mais qui pourrait être successive, de la résine constituant le décor avec celle constituant le revêtement de base. Ce décor comprend au moins deux motifs, conformément à la revendication 1 jointe.

On conseille que le premier motif comprenne de l'oxyde de fer, et que le second motif comprenne un composé organique de couleur rouge et un pigment noir.

De préférence, la résine thermostable résistant au moins à 200°C est une résine fluorocarbonée ou un mélange de résines fluorocarbonées seule ou en mélange avec d'autres résines thermostables.

De préférence, le décor est à base de polytétrafluoréthylène (PTFE).

De préférence également le décor est appliqué par sérigraphie ou tampographie.

Le décor ci-dessus peut être appliqué selon le procédé décrit dans le brevet français FR 2576253.

De préférence, le composé organique de couleur rouge est le rouge de perylène.

Le changement de couleur est visible à travers la couche de résine thermostable dans laquelle ladite substance chimique est noyée, car cette couche est transparente.

Dans le cas où le revêtement de base est constitué d'une résine fluorocarbonée telle que le PTFE et le décor est également à base de résine fluorocarbonée, la cuisson du revêtement de base et du décor permet aux particules de résine du décor de fritter avec les particules de résine du revêtement de base, et quand cette cuisson est simultanée, le frittage simultané obtenu assure un excellent accrochage du décor sur le revêtement de base.

Le changement de couleur du composé chimique, permet à l'utilisateur d'être averti d'une part, que l'article est chaud donc présente un risque de brûlures et d'autre part que la surface de l'article a atteint la bonne température pour son utilisation.

De préférence, le revêtement de base et le décor sont recouverts d'une couche continue de résine fluorocarbonée transparente qui est cuite également et simultanément avec la résine du revêtement de base et celle constituant le décor, permettant un frittage de toutes les particules entre elles. La surface obtenue présente ainsi des propriétés anti-adhésives optimales qui ne sont pas affectées par la présence du décor.

D'autres particularités et avantages de l'invention apparaîtront encore dans la description ci-après.

Aux dessins annexés donnés à titre d'exemples non limitatifs :
- la figure 1 est une vue en coupe transversale partielle d'un récipient de cuisson selon l'invention ;
- la figure 2 est une vue en plan montrant la surface intérieure du récipient de cuisson selon l'invention.

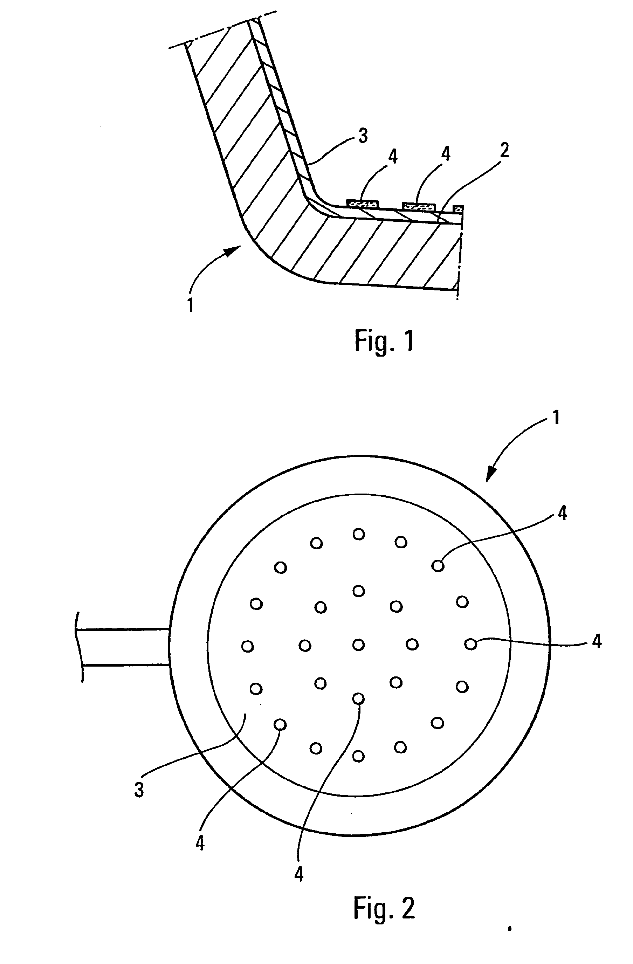

Dans la réalisation représentée sur les figures 1 et 2, le récipient de cuisson constitué par une poêle 1 comporte une surface intérieure 2 recouverte par une couche thermostable de résine fluorocarbonée 3.

Conformément à l'invention, on applique au moins sur une partie de cette couche de résine thermostable 3 un décor 4 à base également d'une résine thermostable, résistant à au moins 200°C, et d'une substance chimique qui change de couleur en fonction de la température de manière réversible, et on cuit cette résine constituant le décor avec celle constituant le revêtement de base. Cette cuisson peut être réalisée successivement après celle du revêtement de base mais il est préférable que ces cuissons soient en fait effectuées en une seule cuisson simultanée.

La résine thermostable, qui est de préférence fluorocarbonée, peut être un mélange de résines fluorocarbonées telles que PTFE, PFA, FEP seule ou mélangée avec d'autres résines thermostables résistant à au moins 200°C telles que PAI, PES, PPS, PEK, PEEK, silicones.

Dans l'exemple représenté, le décor 4 est constitué par une ou des figures. Bien entendu, le décor 4 peut présenter toutes autres formes, telles que des cercles concentriques.

De préférence, le décor 4 est à base de polytétrafluoréthylène.

Le décor 4 peut être appliqué par sérigraphie selon le procédé décrit dans le brevet français 2 576 253 ou par tampographie, ou tout autre moyen.

Par rapport au procédé décrit dans le brevet français ci-dessus, il suffit de remplacer les pigments de coloration mélangés avec la pâte sérigraphique par un composé chimique, susceptible de changer de couleur et qui peut être en poudre.

Dans un exemple avantageux de l'invention, le composé chimique est constitué d'oxyde de fer.

L'oxyde de fer présent dans le décor 4 change de couleur lorsque la surface intérieure 2 du récipient de cuisson 1 atteint la température optimale pour la cuisson.

Un tel composé chimique est de qualité alimentaire, contrairement aux composés de cadnium utilisés dans d'autres applications connues.

Ainsi, lorsque l'oxyde de fer présent dans le décor 4 a changé de couleur, l'utilisateur est averti que la poêle est chaude et que sa surface intérieure a atteint la bonne température pour la cuisson des viandes. Le changement de couleur est bien entendu réversible.

(Un composé chimique est choisi parmi ceux qui s'assombrissent avec la montée en température, c'est le cas de l'oxyde de fer. L'autre composé chimique est choisi parmi ceux qui s'éclaircissent avec la montée en température. C'est le cas du mélange rouge organique (rouge perylène par exemple) plus pigment noir.

Le décor comprend au moins deux motifs, l'un renfermant un composé chimique qui s'assombrit avec la montée en température et l'autre renfermant un composé chimique qui s'éclaircit avec la montée en température. Ainsi, le contraste réalisé entre les deux pigments permet, de mieux distinguer le changement de température.

Dans l'exemple des composés chimiques cités ci-dessus, on observe un contraste très marqué entre les deux décors à partir de 200°C, c'est-à-dire la température optimale pour la friture ou le rôtissage.

Bien entendu l'invention n'est pas limitée aux exemples que l'on vient de décrire et l'on peut apporter à ceux-ci de nombreuses modifications sans sortir du cadre de l'invention.

Ainsi il peut s'appliquer à tout article chauffant et en particulier aux semelles de fer à repasser recouvertes par une couche anti-adhésive, comme à toute surface extérieure d'ustensiles culinaires, plaque de grill etc.

## Revendications

1. - Article chauffant (1) comportant une surface (2) recouverte par un revêtement de base constitué de résine thermostable (3) résistant à au moins 200°C et sur lequel est appliqué un décor (4) à base d'une résine thermostable résistant à au moins 200°C et d'une substance chimique qui change, de manière réversible, de couleur en fonction de la température, ce décor recouvrant une partie du revêtement de base et adhérant à ce dernier du fait de la cuisson de la résine constituant le décor avec celle constituant le revêtement de base, ce décor comprenant au moins deux motifs, **caractérisé en ce que** le premier motif comprend une substance chimique qui s'assombrit avec la montée de la température, et le second motif comprend une substance chimique qui s'éclaircit avec la montée de la température.

2. - L'article chauffant (1) conforme à la revendication 1, **caractérisé en ce que** la substance chimique qui s'assombrit avec la température est l'oxyde de fer et la substance chimique qui s'éclaircit avec la température est un composé organique de couleur rouge associé à un pigment noir.

3. - Article chauffant (1) conforme à la revendications 1 ou 2, **caractérisé en ce que** le composé organique de couleur rouge est le rouge de pérylène.

4. - Article chauffant (1) conforme à l'une des revendications 1 à 3, **caractérisé en ce que** la résine thermostable résistant au moins à 200°C du revêtement de base et/ou du décor est une résine fluorocarbonée ou un mélange de résines fluorocarbonées seule ou en mélange avec d'autres résines thermostables.

5. - Article chauffant (1) conforme à l'une des revendications 1 à 4, **caractérisé en ce que** le décor et le revêtement de base sont recouverts d'une couche continue de polytétrafluoéthylène sensiblement transparente.

6. - Article chauffant (1) conforme à l'une des revendications 1 à 5, **caractérisé en ce qu'**il est constitué par un récipient de cuisson.

7. - Article chauffant conforme à l'une des revendications 1 à 5, **caractérisé en ce qu'**il est constitué par une semelle de fer à repasser.

8. - Procédé pour recouvrir au moins une surface (2) d'un article chauffant (1) par un revêtement de base constitué de résine thermostable (3) résistant à au moins 200°C comprenant les étapes suivantes :
- on applique, sur une partie du revêtement de base, un décor (4) à base d'une résine thermostable résistant à au moins 200°C et d'une substance chimique qui change, de manière réversible, de couleur en fonction de la température, ce décor comprenant au moins deux motifs,
- on cuit cette résine constituant le décor avec celle constituant le revêtement de base,
**caractérisé en ce que** l'on utilise un premier motif comprenant une substance chimique qui s'assombrit avec la température et un second motif comprenant une substance chimique qui s'éclaircit avec la température.

9. - Procédé conforme à la revendication 8, **caractérisé en ce que** la substance chimique qui s'assombrit avec la température est l'oxyde de fer et la substance chimique qui s'éclaircit avec la température est un composé organique de couleur rouge associé à un pigment noir.

10. - Procédé conforme à la revendication 9, **caractérisé en ce que** le composé organique de couleur rouge est le rouge de pérylène.

11. - Procédé conforme à la revendication 9 ou 10, **caractérisé en ce qu'**on réalise la cuisson de la résine constituant le décor simultanément avec celle du revêtement de base.

12. - Procédé conforme à l'une des revendications 8 à 11, **caractérisé en ce que** le décor (4) est appliqué par sérigraphie ou tampographie.

## Claims

1. A heating appliance (1) having a surface (2) covered with a basis coating consisting of a thermostable resin (3) resistant to temperatures up to at least 200°C and to which is applied a decoration (4) based on a thermostable resin resistant to temperatures up to at least 200°C and on a chemical substance, which reversibly changes colour as a function of temperature, the decoration covering part of the basic coating and adhering thereto because of curing of the resin constituting the decoration with the resin constituting the basic coating, said decoration comprising at least two patterns, **characterized in that** the first pattern contains a chemical substance which darkens as the temperature rises and the second pattern contains a chemical substance which lightens as the temperature rises.

2. A heating appliance according to claim 1, **characterized in that** the chemical substance which darkens as the temperature rises is made up of iron oxide, and the chemical substance which lightens as the temperature rises is made up of a red organic compound bonded to a black pigment.

3. A heating appliance according to claim 1 or 2, **characterized in that** the red organic compound is perylene red.

4. A heating appliance according to any of claims 1 to 3, **characterized in that** the thermostable resin resistant to temperatures up to at least 200°C of the basic boating and/or the decoration is a fluorocarbon resin or a mixture of exclusively fluorocarbon resins or a mixture of fluorocarbon resins with other thermostable resins.

5. A heating appliance according to any of claims 1 to 4, **characterized in that** the decoration and the basic coating are covered with a continuous layer of substantially transparent polytetrafluoroethylene.

6. A heating appliance according to any of claims 1 to 5, **characterized in that** it is in the form of a cooking container.

7. A heating appliance according to any of claims 1 to 5, **characterized in that** it is in the form of the sole of a clothes iron.

8. A method for covering at least one surface (2) of a heating appliance (1) with a basic coating consisting of a thermostable resin (3) resistant to temperatures up to a thermostable resin (3) resistant to temperatures up to at least 200°C, the method including the following steps:
- a decoration (4), based on a thermostable resin resistant to temperatures up to at least 200°C, and on a chemical substance which reversibly changes colour as a function of temperature is applied over part of the basic coating, and
- the resin constituting the decoration is cured with the resin constituting the basic coating,
**characterized in that** two patterns are used, wherein the first pattern contains a chemical substance which darkens as the temperature rises and the second pattern contains a chemical substance which lightens as the temperature rises.

9. A method according to claim 8, **characterized in that** the chemical substance which darkens as the temperature rises is made up of iron oxide, and the chemical substance which lightens as the temperature rises is made up of a red organic compound bonded to a black pigment.

10. A method according to claim 9, **characterized in that** the red organic compound is perylene red.

11. A method according to claim 9 or 10, **characterized in that** the resin constituting the decoration is cured simultaneously with the resin constituting the basic coating.

12. A method according to any of claims 8 to 11, **characterized in that** the decoration (4) is applied by screenprinting or by printing with a stamp.

## Patentansprüche

1. Heizender Gegenstand (1) mit einer Oberfläche (2), die bedeckt ist mit einer Grundschicht aus wärmebeständigem Kunstharz (3), das bis mindestens 200°C wärmefest ist, und auf der ein Dekor (4) auf der Grundlage eines wärmebeständigen Kunstharzes, das bis mindestens 200°C wärmefest ist, und eines chemischen Stoffes, der reversibel seine Farbe in Abhängigkeit von der Temperatur verändert, angebracht ist, wobei dieses Dekor einen Teil der Grundschicht bedeckt und an letzterer wegen des Brennens
des das Dekor bildenden Kunstharzes mit dem die Grundschicht bildenden Kunstharz an letzterer haftet, wobei dieses Dekor mindestens zwei Motive aufweist, **dadurch gekennzeichnet, dass** das erste Motiv einen chemischen Stoff aufweist, der bei Anstieg der Temperatur dunkler wird, und das zweite Motiv einen chemischen Stoff aufweist, der bei Anstieg der Temperatur heller wird.

2. Heizender Gegenstand (1) nach Anspruch 1, **dadurch gekennzeichnet, dass** der chemische Stoff, der bei Anstieg der Temperatur dunkler wird, Eisenoxid ist und der chemische Stoff, der bei Anstieg der Temperatur heller wird, eine organische Verbindung von roter Farbe ist, die mit einem schwarzen Pigment versetzt ist.

3. Heizender Gegenstand (1) nach Anspruch 1 oder 2, **dadurch gekennzeichnet, dass** die organische Verbindung von roter Farbe Perylenrot ist.

4. Heizender Gegenstand (1) nach einem der Ansprüche 1 bis 3, **dadurch gekennzeichnet, dass** das wärmebeständige Kunstharz, das bis mindestens 200°C wärmefest ist, der Grundschicht und/oder des Dekors ein Fluorkohlenstoffkunstharz oder eine Mischung von Fluorkohlenstofflcunstharz allein oder im Gemisch mit anderen wärmebeständigen Kunstharzen ist.

5. Heizender Gegenstand (1) nach einem der Ansprüche 1 bis 4, **dadurch gekennzeichnet, dass** das Dekor und die Grundschicht mit einer durchgehenden Schicht von im Wesentlichen transparentem Polytetrafluorethylen versehen sind.

6. Heizender Gegenstand (1) nach einem der Ansprüche 1 bis 5, **dadurch gekennzeichnet, dass** er aus einem Koch-, Gar- oder Bratgefäß besteht.

7. Heizender Gegenstand nach einem der Ansprüche 1 bis 5, **dadurch gekennzeichnet, dass** er aus einer Bügeleisensohle besteht.

8. Verfahren zum Bedecken mindestens einer Oberfläche (2) eines heizenden Gegenstandes
(1) mit einer Grundschicht bestehend aus einem wärmebeständigen Kunstharz (3), das bis mindestens 200°C wärmefest ist, mit den folgenden Stufen:
- man bringt auf einen Teil der Grundschicht ein Dekor (4) auf der Grundlage eines wärmebeständigen Kunstharzes, das bis mindestens 200°C wärmefest ist, und eines chemischen Stoffes auf, der seine Farbe in Abhängigkeit von der Temperatur reversibel verändert, wobei dieses Dekor mindestens zwei Motive aufweist,
- man brennt (härtet) dieses das Dekor bildende Kunstharz zusammen mit dem die Grundschicht bildenden Kunstharz,
**dadurch gekennzeichnet, dass** man ein erstes Motiv verwendet, das einen chemischen Stoff enthält, der mit der Temperatur dunkler wird, und ein zweites Motiv verwendet, das einen chemischen Stoff enthält, der mit der Temperatur heller wird.

9. Verfahren nach Anspruch 8, **dadurch gekennzeichnet, dass** der chemische Stoff, der mit der Temperatur dunkler wird, Eisenoxid ist und der chemische Stoff, der mit der Temperatur heller wird, eine organische Verbindung von roter Farbe zusammen mit einem schwarzen Pigment ist.

10. Verfahren nach Anspruch 9, **dadurch gekennzeichnet, dass** die organische Bindung von roter Farbe das Perylenrot ist.

11. Verfahren nach Anspruch 9 oder 10, **dadurch gekennzeichnet, dass** das Brennen (Aushärten) des das Dekor bildenden Kunstharzes gleichzeitig mit dem der Grundschicht durchgeführt wird.

12. Verfahren nach einem der Ansprüche 8 bis 11, **dadurch gekennzeichnet, dass** das Dekor (4) durch Siebdruck oder Stempeldruck aufgebracht wird.
